(19) **Europäisches Patentamt European Patent Office Office européen des brevets**

(11) **EP 4 073 472 B1**

(12) **FASCICULE DE BREVET EUROPEEN**

(45) Date de publication et mention de la délivrance du brevet:
**07.01.2026 Bulletin 2026/02**

(21) Numéro de dépôt: **20817036.5**

(22) Date de dépôt: **08.12.2020**

(51) Classification Internationale des Brevets (IPC):
**G01S 7/526** (2006.01)   **G01S 7/534** (2006.01)
**G01D 5/353** (2006.01)

(52) Classification Coopérative des Brevets (CPC):
**G01D 5/35383; G01S 7/526; G01S 7/534**

(86) Numéro de dépôt international:
**PCT/EP2020/085022**

(87) Numéro de publication internationale:
**WO 2021/116077 (17.06.2021 Gazette 2021/24)**

(54) **DISPOSITIF DE MESURE DE SIGNAUX DÉLIVRÉS PAR UN RÉSEAU DE CAPTEURS À BASE DE CAVITÉS LASER À FIBRE OPTIQUE**

VORRICHTUNG ZUM MESSEN VON SIGNALEN, DIE VON EINEM NETZWERK VON FASEROPTISCHEN LASERRESONATORSENSOREN BEREITGESTELLT WERDEN

DEVICE FOR MEASURING SIGNALS PROVIDED BY A NETWORK OF FIBRE OPTIC LASER CAVITY SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2019 FR 1914254**

(43) Date de publication de la demande:
**19.10.2022 Bulletin 2022/42**

(73) Titulaire: **THALES**
**92400 Courbevoie (FR)**

(72) Inventeurs:
• **BOUFFARON, Renaud**
**06903 Sophia Antipolis (FR)**
• **PEIGNE, Arnaud**
**06903 Sophia Antipolis (FR)**
• **ERARD, Olivier**
**06903 Sophia Antipolis (FR)**
• **DOISY, Martine**
**06903 Sophia Antipolis (FR)**
• **BARTHE, Alice Marie**
**06560 Sophia Antipolis (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A2- 0 895 072        EP-A2- 2 833 102**
**WO-A1-2019/046881        WO-A2-2011/039501**

• **A.D KERSEY ET AL: "Fiber grating sensors", JOURNAL OF LIGHTWAVE TECHNOLOGY, vol. 15, no. 8, 1 August 1997 (1997-08-01), USA, pages 1442 - 1463, XP055673778, ISSN: 0733-8724, DOI: 10.1109/50.618377**

**Description**

Domaine technique

L'invention se rapporte au domaine général des cavités laser à fibre optique (CLFO). Elle s'inscrit dans le domaine des réseaux de capteurs à base de cavités laser à fibre optique et concerne les architectures d'interrogation associées. De manière générale cette invention présente un intérêt particulier pour les systèmes nécessitant un très grand nombre de capteurs.

Elle intéresse en particulier les capteurs à base de cavités laser à fibre optique utilisés pour la réalisation d'antennes acoustiques SONAR en technologie optique.

Technique antérieure

Les capteurs optiques à base de cavités laser à fibre optique, ou CLFO, sont étudiés depuis une dizaine d'années. Les CLFO sont des lasers à fibre optique de structure DFB ou DBR ("Distributed FeedBack" ou "Distributed Bragg Reflector" selon la dénomination anglo-saxonne). Ces lasers peuvent être utilisés pour former des capteurs de très grande sensibilité par conversion de la grandeur à mesurer en élongation. La variation de longueur de la cavité des CLFO induite par la variation de la grandeur mesurée, se traduit par une variation de la fréquence d'émission de l'onde laser produite par la CLFO.

Classiquement, dans une chaine de détection, chaque CLFO est associée à une voie de détection permettant d'extraire les variations de sa fréquence optique au cours du temps.

Il existe à l'heure actuelle un besoin de constituer des systèmes de mesure comportant un grand nombre de capteurs optiques, généralement CLFO, formant un réseau.

La réalisation d'un réseau comprenant un grand nombre de capteurs est actuellement basée sur l'utilisation en parallèle de plusieurs systèmes élémentaires. Chaque système élémentaire constituant une voie de détection comporte un nombre fini de capteurs. La mise en parallèle de N systèmes élémentaires implique donc la prise en compte et le traitement de N fois le nombre de voies de mesure de chaque système élémentaire.

Dans ces systèmes élémentaires, les CLFO sont pompées optiquement (à 980 nm ou 1480 nm) en série sur une même fibre optique et multiplexées en longueur d'onde de façon à former un système élémentaire. Cependant, le nombre maximal de CLFO raccordées à un même système élémentaire n'excède en principe pas quelques dizaines d'unités (jusqu'à 40 environ dans la bande d'émission des CLFO de 1525 nm - 1570 nm par exemple). La limitation du nombre de CLFO provient principalement des propriétés intrinsèques de ces dernières (espacement entre les canaux, sensibilité à la rétro-réflexion, largeur du profil de gain, etc.).

Pour augmenter les performances du réseau de capteurs, il faut en partie augmenter le nombre de CLFO dans un système d'antennes de détection acoustiques. La méthode naturellement utilisée est de multiplier le nombre de voies de détection en dupliquant l'architecture élémentaire autant de fois que nécessaire.

D'autre part, le traitement des données de cette chaine de détection avec un nombre très important de voies de détection devient de plus en plus difficile. Pour exploiter toutes ces voies de détection, la méthode naturellement utilisée pour la chaîne de mesure de ce dispositif, est le traitement au sein de N fois le nombre de voies de détection de chaque système élémentaire sur N voies de mesure élémentaires.

Cependant, une telle méthode réduit d'autant la compacité du système. En outre, cette solution de chaîne de mesure comportant N voies de mesure indépendantes augmente considérablement la consommation électrique du système et le coût de la chaîne d'interrogation. D'un point de vue système elle n'est donc pas satisfaisante. Par suite, pour les applications SONAR, pour lesquelles il existe un réel besoin concernant le volume total du système d'interrogation ainsi que de sa consommation électrique une telle solution n'est pas envisageable.

Une autre solution connue, consiste à combiner les différentes voies de mesure de chaque système élémentaire en une chaine de mesure comportant une voie de mesure unique, en réalisant un multiplexage temporel dont le fonctionnement est basé sur la mise en œuvre d'une méthode interférométrique qui permet de mesurer la fréquence optique de chaque CLFO formant un système donné, sans avoir à multiplier les voies de mesure.

Les dispositifs aptes à mettre en œuvre cette méthode ont une structure fonctionnelle principalement basée sur l'utilisation conjointe d'un commutateur optique et d'un interféromètre à modulation de phase. Leur structure comporte également un récepteur optique comportant un démodulateur (33) et une photodiode, qui convertit le signal optique délivré par l'interféromètre en un signal électrique, dont l'intensité est donnée par l'expression générale suivante :

$$i = i_0[1 + V\cos(\phi_c(t) + \Delta\phi(t))] \quad [1]$$

où $i_0$ représente une intensité moyenne, et où V représente la visibilité des franges d'interférences. La grandeur V est une grandeur sans dimension définie par un rapport des amplitudes optiques des 2 bras de l'interféromètre. $\phi_c(t)$ représente l'onde porteuse de modulation tandis que $\Delta\phi(t)$ représente le signal à mesurer. La variation de fréquence de la CLFO est en effet contenue dans la variation de phase de cette fonction.

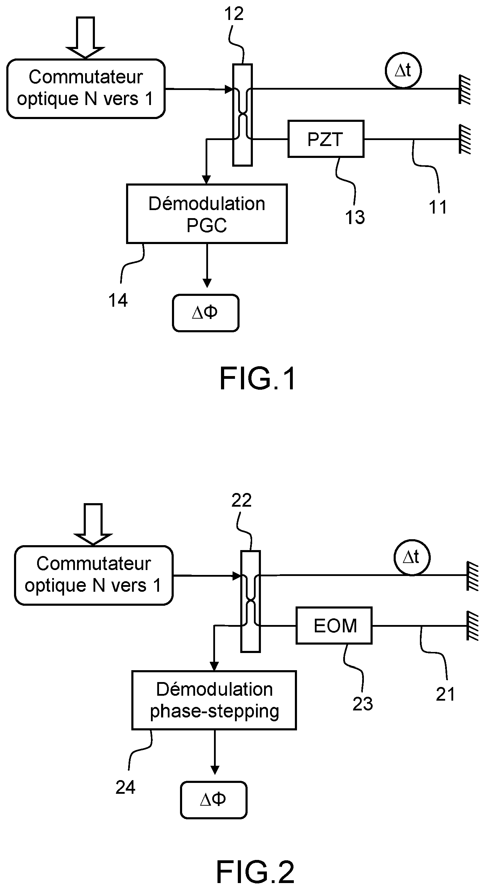

La réalisation d'une telle chaîne de mesure peut être envisagée en utilisant des interféromètres mettant en œuvre des méthodes de mesure par modulation de phase externe basées sur les principes connus sous les dénominations anglo-saxonnes de "Phase Generated Carrier" (PGC) ou de "Phase-Stepping", dont les schémas de principe sont présentés en figures 1 et 2.

Les méthodes dite "Phase Generated Carrier" ou PGC (figure 1) reposent sur une modulation de phase sinusoïdale sur l'une des deux fibres (définissant les bras de l'interféromètre) de sortie 11 d'un coupleur optique 12 par l'intermédiaire d'un modulateur de phase piézo-électrique (PZT) 13, et sur une démodulation du signal au moyen d'un dispositif de démodulation 14 comportant une photodiode en tête. Le courant i en sortie de photodiode est ainsi exploité pour déterminer la phase $\Delta\Phi$ porteuse de l'information de mesure recherchée.

Le signal électrique en sortie de la photodiode (du détecteur photoélectrique) prend ici la forme suivante :

$$i = i_0[1 + V\cos(\phi_c\sin(\omega_c t) + \Delta\phi)] \qquad [2]$$

où $\phi_c$ est l'amplitude de la modulation de phase et $\omega_c = 2\pi f_c$ est la pulsation de la modulation de phase.

Ce signal peut être développé sous la forme suivante :

$$i = i_0[1 + V\{\cos(\phi_c\sin(\omega_c t))\cos(\Delta\phi) - \sin(\phi_c\sin(\omega_c t))\sin(\Delta\phi)\}] \qquad [3]$$

de sorte qu'en décomposant l'expression précédente en fonctions de Bessel, on constate que le spectre du signal modulé (i.e. le courant électrique en sortie de la photodiode) consiste en une fréquence fondamentale à $\omega_c$ (porteuse) ainsi que ses harmoniques sur lesquelles le signal $\Delta\phi$ apparait dans les bandes latérales de modulation.

Les méthodes PGC utilisent cette caractéristique pour extraire, par des méthodes de traitement connues non décrites ici, les composantes de $\Delta\phi$ en phase et en quadrature en détectant sur une harmonique paire et sur une harmonique impaire, et obtenir ainsi le signal $\Delta\phi$.

Les méthodes dites de "Phase-Stepping" (figure 2) reposent sur une modulation de phase par marche (n marches) sur l'une des sorties (bras de l'interféromètre) 21 d'un coupleur optique 22 par l'intermédiaire d'un modulateur électro-optique 23, et sur une démodulation 24 du signal marche par marche. Les courants (i1, .. in), mesurés pour chaque marche sont ainsi exploités pour déterminer la phase $\Delta\Phi$, porteuse de l'information de mesure recherchée.

Le signal électrique en sortie de photodiode s'écrit

$$i_n = i_0[1 + V\cos(\phi_n + \Delta\phi)] \qquad [4]$$

avec  $\phi_n = n\dfrac{\pi}{2}$ ,et avec n représentant le nombre de marches.

Par suite en considérant N marches, et en faisant l'hypothèse que le déphasage à mesurer $\Delta\phi$ ne varie pas pendant un cycle de N marches, on obtient un système de N équations avec pour inconnues $I_0$, V et $\Delta\phi$ à partir duquel on peut déterminer $\Delta\phi$. De manière évidente le nombre N est ici choisi supérieur à 3, le nombre d'équations, autrement dit de marches. Un nombre N égal à 4 étant cependant privilégié de façon à garantir une démodulation robuste aux erreurs de phase engendrées par exemple par un biais de phase induit par le modulateur.

L'emploi de dispositifs mettant en œuvre ces deux méthodes connues, basées sur un principe de modulation de phase, induit un certain nombre de contraintes.

Pour multiplexer un nombre donné de voies de détection sur une même chaîne de mesure, afin de limiter le nombre de voies de mesure, il est à noter que ces mises en œuvre sont très rarement envisagées ni décrite dans la littérature spécialisée relative au domaine technique considéré ici.

Par ailleurs, l'association d'un interféromètre à modulation de phase mettant en œuvre l'une ou l'autre des méthodes décrites précédemment, à un commutateur optique, induit des limitations des signaux traités, en termes de bande passante et de dynamique notamment, qui rendent les performances obtenue par de tels dispositifs insuffisantes pour les applications SONAR.

En effet, de manière connue, la bande-passante B occupée par un signal modulé ayant pour expression $\Delta\phi = \phi_s\sin(2\pi f_s t)$ , où $\phi_s$ représente l'amplitude instantanée du signal à mesurer et fs représente la fréquence instantanée de ce signal, est définie par la règle de Carson et est donnée par la relation suivante :

$$B = 2f_s(1 + \phi_s) \qquad [5]$$

Cette relation permet de définir la bande-passante minimum nécessaire B du dispositif de démodulation, en fonction du besoin système Cette bande passante est une caractéristique importante du signal utile. Sa largeur ne doit pas, en particulier, dépasser celle de la bande-passante du système de démodulation pour que le signal utile ne soit pas distordu lors de la démodulation.

Cette bande-passante doit être alors comparée à la bande-passante disponible (défini par la technique de démodulation utilisée) qui dépend de la forme d'onde, et de la fréquence de la porteuse. Par suite, Il est donc nécessaire, si l'on veut pouvoir démoduler une grande dynamique de signal possible, d'étendre le plus possible cette bande passante de démodulation.

Cette limitation imposée, par la règle de Carson, constitue un des inconvénients majeurs de la méthode PGC, qui nécessite l'utilisation de 2 fois plus de bande passante pour démoduler la même dynamique de signal que la méthode de "Phase-Stepping".

De plus, l'utilisation d'un commutateur optique de fréquence de commutation $f_{SW}$ se traduit en effet, de manière connue, dans le domaine fréquentiel, par une périodisation du spectre du signal optique porté par chacune des voies commutées.

Par suite, afin de ne pas restreindre la bande-passante, il est nécessaire qu'il n'y ait pas de recouvrement entre les différents spectres. Cela implique que la fréquence $f_p$ de la porteuse et la fréquence $f_{SW}$ du commutateur respectent la condition $f_{SW} > 2f_p$.

Enfin, afin de respecter le théorème de Shannon, le signal étant modulé en phase, il est nécessaire que $f_{SW} = 4f_p$.

Dans ce cas d'emploi d'un interféromètre basé sur la méthode de "Phase-Stepping", l'utilisation d'un commutateur optique, implique de prendre les échantillons pour les N voies à chaque saut de phase, diminution significative de la fréquence de la porteuse. Les conditions imposées par l'emploi d'un commutateur optique s'ajoutent alors aux conditions imposées par la règle de Carson pour limiter la dynamique et la bande passante des dispositifs basés sur ces méthodes ainsi que la dynamique du signal obtenu.

EP 2 833 102 divulgue un réseau de capteurs infrarouges à thermopile à haute résolution comprenant plusieurs canaux de traitement de signal parallèles destinés aux signaux d'un ensemble de capteurs, ainsi qu'un port numérique pour la sortie série des signaux.

A.D Kersey et al., « Fiber grating sensors », Journal of Lightwave Technology, vol. 15, no, 8, 1 août 1997, pages 1442-1463, USA divulgue une revue des développements de capteurs à réseaux de Bragg et en particulier mentionne mentionne l'utilisation d'un interféromètre à translation de fréquence (par exemple l'interféromètre de Michelson).

WO 2019046881 A1 divulgue un agencement de capteur à fibre optique qui comprend une pluralité d'éléments de capteur à base de fibre optique, les éléments de capteur étant configurés pour modifier un signal de porteuse optique associé en fonction de changements d'une quantité détectée à un emplacement de l'élément de capteur et d'un agencement de modulation de phase pour moduler la phase de chaque signal de porteuse optique conformément à des signaux de séquence binaire pseudo-aléatoire non corrélée respectifs.

EP 0 895 072 A2 divulgue un dispositif de mesure multiplexé à haute résolution des variations de fréquence dans les capteurs acoustiques multimode à laser à fibre optique.

WO2011/039501 A2 divulgue un procédé de détection acoustique répartie au cours duquel la dérivée ou la vitesse de modification d'un signal rétro-diffusé par une fibre est mesurée. La modification ou la dérivée de la phase mesurée selon ledit procédé présente une amplitude beaucoup plus petite que le signal lui-même si la différence entre les moments auxquels le signal est mesuré est inférieure à la période du signal en cours de mesure, ce qui permet d'obtenir une sensibilité plus faible.

Exposé de l'invention

Un but de l'invention est de proposer, dans le cadre d'applications sonar notamment, un moyen permettant d'utiliser un grand nombre de CLFO en limitant le nombre de voies de mesure dans la chaîne de mesure permettant de traiter le signal provenant de la chaîne de détection, tout en conservant des performances systèmes compatibles des applications SONAR visées.

A cet effet l'invention a pour objet un dispositif de détection de signaux sonar comportant N voies de détection possédant chacune M cavités laser à fibre optique, lesdites voies de détection étant configurées pour détecter et convertir les signaux acoustiques en signaux optiques, ainsi qu'une chaîne de mesure unique, combinant les N voies de détection par multiplexage temporel.

Selon l'invention, le dispositif est caractérisé par une chaine de mesure qui combine un commutateur optique et des moyens de mesure interférométrique configurés, pour mesurer, pour chacune des N voies de détection, la fréquence optique du signal délivré par chacune des M cavités laser à fibre optique.

Ladite chaine de mesure comprend:

- un commutateur optique Nx1 permettant de sélectionner, à chaque mesure interférométrique, la fibre optique comportant les M cavités laser à fibre optique multiplexées en longueur d'onde formant une même voie de détection;

- un interféromètre à translation de fréquence configuré pour transformer le signal optique modulé en fréquence délivré par les M cavités laser à fibre optique formant une même voie de détection en un signal optique modulé en intensité;
- un démultiplexeur optique permettant de séparer les M signaux optiques formant ledit signal optique modulé en intensité et délivrant chacun des M signaux optiques sur une sortie propre permettant des conversions photoélectriques indépendantes;
- un étage de conversion optoélectronique configuré pour générer, à partir du signal résultant du battement des deux ondes de fréquences différentes généré dans l'interféromètre, un signal électrique, analogique puis numérique;
- un démultiplexeur temporel permettant de reconstituer les différents signaux temporels issus des différentes voies de détection;
- un démodulateur de phase permettant de traiter les signaux reconstitués par le démultiplexeur temporel à partir des signaux optiques délivrés par chacune des cavités laser à fibre optique.

Selon diverses dispositions, pouvant être considérées chacune séparément ou en combinaison avec une ou plusieurs autres dispositions, le dispositif selon l'invention peut présenter différentes caractéristiques techniques attachées aux éléments qui le constituent. Ainsi,

Selon une première disposition, l'interféromètre à translation de fréquence comprend des moyens pour translater en fréquence, l'un par rapport à l'autre, les signaux optiques transitant par chacun des bras de l'interféromètre;

Selon une autre disposition, les moyens de translation en fréquence sont placés dans le bras le plus long de l'interféromètre;

Selon une autre disposition, les moyens de translation en fréquence sont placés dans le bras le plus court de l'interféromètre;

Selon une autre disposition, les moyens de translation en fréquence sont composés de deux translateurs de fréquence réalisant des translations de fréquences distinctes, placés chacun dans un des bras de l'interféromètre;

Selon une autre disposition, les moyens de translation en fréquence sont des modulateurs acousto-optiques.

Selon une autre disposition, les moyens de translation en fréquence sont des éléments optiques intégrés dans une fibre optique;

Selon une autre disposition, l'interféromètre à translation de fréquence est un interféromètre de Michelson;

Selon une autre disposition, l'interféromètre à translation de fréquence comporte des miroirs de Faraday configurés et agencés pour rendre le système indépendant des variations en polarisation des différents signaux par les cavités laser à fibre optique;

Selon une autre disposition, chacun des bras de l'interféromètre est formé par une fibre optique de taille différente, la fibre optique formant le bras le plus long présentant une sensibilité à la température plus faible que la fibre du bras le plus court.

Selon une autre disposition, le démultiplexeur temporel permet de, ou est configuré pour, générer un signal de commande du commutateur optique Nx1

Selon une autre disposition, le démodulateur de phase permet de, ou est configuré pour, générer un signal de commande de translation de fréquence de l'interféromètre.

Avantageusement, la commande de translation de fréquence permet de définir une valeur de fréquence de porteuse $f_p$.

Les caractéristiques et avantages de l'invention seront mieux appréciés grâce à la description qui suit, description qui s'appuie sur les figures annexées qui présentent:

[Fig 1] La figure 1, commentée précédemment, une illustration schématique d'un premier principe connu ("Phase Generated Carrier") d'acquisition des mesures réalisées au moyen de CLFO, permettant de limiter le nombre de voies de mesures;

[Fig 2] La figure 2, commentée précédemment, une illustration schématique d'un second principe connu ("phase stepping") d'acquisition des mesures réalisées au moyen de CLFO, permettant de limiter le nombre de voies de mesures;

[Fig 3] La figure 3, une représentation schématique de principe du dispositif selon l'invention;

[Fig 4] La figure 4, une représentation schématique détaillée présentant les différents étages du dispositif selon l'invention;

[Fig 5] La figure 5, un chronogramme de principe illustrant les contraintes temporelles qui conditionne les performances demandées aux différents éléments constituant le dispositif selon l'invention.

Il est à noter que, sur les figures annexées, un même élément fonctionnel ou structurel porte de préférence un même symbole repère.

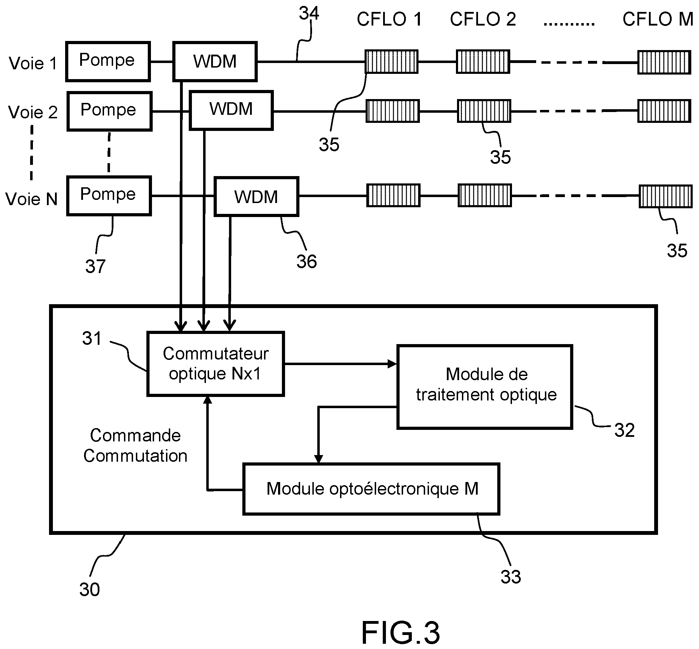

La structure générale d'un dispositif de détection comportant la chaîne de mesure selon l'invention est illustrée par le schéma de principe de la figure 3. Le dispositif récepteur 30 selon l'invention comporte principalement :

-  un commutateur optique Nx1, 31, à N entrées et une sortie, dont les entrées sont reliées aux N voies de détection formant le réseau de capteurs considéré, chaque voie de détection comportant un dispositif de pompage laser 37 associé à un dispositif de multiplexage en longueur d'onde 36 ("Wavelength Division Multiplexing" ou WDM selon la dénomination anglo-saxonne) relié à une fibre optique 34 présentant une certain nombre de cavités laser à fibre optique 35, ou CFLO, accordées chacune sur une des longueurs d'onde transportées par la fibre 34 ;

-  un module de traitement optique 32, comportant un interféromètre à translation de fréquence, dont l'entrée est reliée, par fibre optique, à la sortie du commutateur 31 et qui délivre M signaux de sortie, chaque signal résultant de l'onde produite par un des M CFLO qui constituent une voie de détection ;

-  un module optoélectronique 33 chargé de la conversion des ondes lumineuses délivrées par le module de traitement optique 32 en signaux électriques dont on réalise une démodulation en phase.

Le dispositif selon l'invention intègre ainsi un commutateur optique Nx1, 31, à N voies d'entrées et une voie de sortie, permettant de sélectionner l'onde lumineuse portée par une des N fibres optiques 34 formant les N voies de détection d'un réseau de capteurs, ainsi qu'un interféromètre à translation de fréquence.

Avantageusement, l'association d'un commutateur 31 permettant de réduire le nombre de voies de mesure nécessaires en une voie de mesure unique pour traiter les N voies de détection du réseau de capteurs et d'un interféromètre à translation de fréquence permettant de conserver la dynamique et la bande-passante nécessaire pour traiter, sans altération, les signaux portés par l'onde lumineuse véhiculée par chaque fibre optique, permet de réaliser des réseaux de capteurs 35 comportant un nombre important de cavités laser à fibre optique CLFO et présentant des caractéristiques techniques et de caractéristiques en termes, de compacité, de coût et de consommation énergétique, permettant de les employer dans le cadre d'applications ne permettant généralement pas leur utilisation; des application SONAR en particulier.

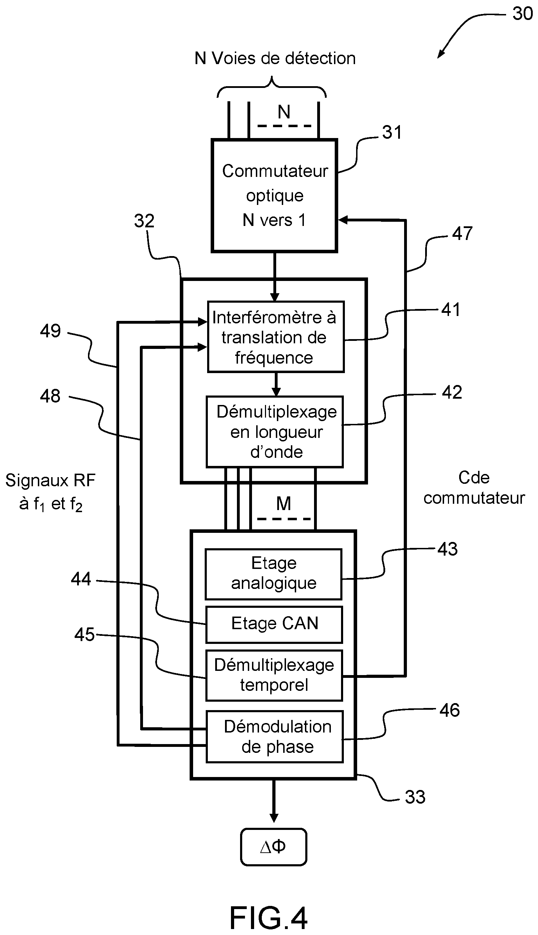

Le principe de fonctionnement du dispositif selon l'invention est décrit dans la suite du texte en considérant l'illustration de la figure 4 qui détaille la constitution du module de traitement optique 32 et celle du module optoélectronique, ou module de démodulation, 33.

Comme l'illustre la figure 4, le module de traitement optique 32 du dispositif selon l'invention comporte un interféromètre à translation de fréquence 41, constitué d'un interféromètre associé à des d'éléments translateurs de fréquence introduisant un décalage de fréquence entre les ondes optiques se propageant dans les deux bras de l'interféromètre, de façon à produire un battement de fréquence au niveau du signal transmis à l'étage de réception 43, ou étage analogique, du module de démodulation 33 (une photodiode par exemple).

D'un point de vue fonctionnel, l'interféromètre à translation de fréquence 41 fonctionne comme décrit ci-après.

L'onde optique incidente $\overline{E_0}$ de fréquence $v_0$ est distribuée aux deux bras de l'interféromètre au moyen d'un coupleur 50/50.

La partie du signal $\overline{E_0}$ qui transite par le premier bras de l'interféromètre, traverse un premier module translateur de fréquence, qui induit un premier décalage $f_1$ de la fréquence du signal, puis subit un retard $\tau$ avant de traverser à nouveau le module translateur de fréquence après réflexion sur l'extrémité de la voie et de subir un second décalage $f_1$.

Le retard $\tau$ peut par exemple être induit par le passage au travers d'une bobine de fibre optique de longueur L et un second passage, après réflexion sur l'extrémité du bras de l'interféromètre, au travers de ladite bobine. Il a alors pour expression :

$$\tau(t) = 2nL/c$$

où n représente l'indice de réfraction de la fibre optique utilisée, de longueur L et c la vitesse de la lumière dans le vide.

Par suite le signal optique d'entrée $\overline{E_0}$ ayant pour expression générale, en fonction du temps t :

$$\overline{E_0} = E_0 e^{2i\pi\nu_0 t} \qquad [6]$$

le signal $\overline{E_1}$ ainsi formé a pour expression :

$$\overline{E_1} = E_1 e^{i\{2\pi[\nu_0+2f_1]t+2\pi[\nu_0+f_1]\tau\}} \qquad [7]$$

où $\nu_0 + 2f_1$ est la fréquence décalée de l'onde optique $\overline{E_1}$, le décalage en fréquence $f_1$ étant induit par le premier module translateur de fréquence 41.

De la même façon, la partie du signal $\overline{E_0}$ qui transite par le second bras de l'interféromètre, traverse un second module translateur de fréquence, qui induit un second décalage $f_2$. Elle ne subit aucun retard.

Par suite, le signal $\overline{E_2}$ ainsi formé a pour expression :

$$\overline{E_2} = E_2 e^{i\{2\pi[\nu_0+2f_2]t\}} \qquad [8]$$

où $\nu_0 + 2f_2$ est la fréquence décalée de l'onde optique $\overline{E_2}$, le décalage en fréquence $f_2$ étant induit par le second module translateur de fréquence.

L'intensité de l'onde optique résultante $\overline{E_3} = \overline{E_1} + \overline{E_2}$, résultant de la recombinaison des ondes $\overline{E_1}$ et $\overline{E_2}$ au niveau du coupleur 50/50, est convertie par le récepteur optique 43, une photodiode par exemple, en un courant I qui a pour expression générale :

$$I = \overline{E_3}\,\overline{E_3}^{*} = I_0 + 2\sqrt{I_1 I_2} \cos\{2\pi[\nu_0 + 2f_1 - \nu_0 - 2f_2]t + 2\pi[\nu_0 + f_1]\tau\} \qquad [9]$$

où $I_0 = I_1 + I_2$ représente la partie non cohérente de l'intensité, c'est-à-dire la somme des modules au carré des amplitudes E1 et E2. La partie cohérente de l'intensité est représenté par le double produit E1.E2.

Par suite, l'intensité du signal électrique en sortie de la photodiode a pour expression :

$$i\,(t) = \overline{E_3}\,\overline{E_3}^{*} = i_0[1 + V\cos\{4\pi[f_1 - f_2]t + \Delta\phi\,(t)\}] \qquad [10]$$

où le terme de phase $\Delta\phi$ est donné par la relation :

$$\Delta\phi(t) = 2\pi[\nu_0(t) + f_1]\tau \qquad [11]$$

La variation de phase mesurée $\Delta\phi$ s'exprime donc de manière à ce que la fréquence considérée est la fréquence centrale $\nu_0$ décalée de $f_1$.

Le terme de phase $\Delta\phi$ correspond à une modulation de phase sur une porteuse de fréquence $f_p = 2 \cdot (f_1 - f_2)$. Le signal modulé présente donc une bande-passante d'écoute de largeur maximale égale à :

$$2 \cdot f_p = 4 \cdot (f_1 - f_2)$$

L'association d'un commutateur optique 31 avec un interféromètre à translation de fréquence 41 pour réaliser la séparation des ondes lumineuses provenant des différentes voies de détection, qui sont associées aux différents capteurs CLFO 35, représente une solution optimale. Elle permet en effet d'obtenir le meilleur ratio bande-passante/fréquence de porteuse pour une meilleure dynamique notamment, c'est-à-dire offrant à la chaîne de mesure une sensibilité forte tout en gardant une saturation à haut niveau, de manière à ce que le système s'adapte aisément aux variations de flux mesuré et optimise au mieux ses détections. Pour une longueur de bobine de fibre optique fixée dans chacun des bras de l'interféromètre (i.e. un retard $\tau$ fixé), la méthode PGC nécessite une porteuse de fréquence deux fois plus élevée pour atteindre des performances équivalentes à l'association d'un commutateur optique avec un interféromètre à translation de fréquence, tandis que la méthode de "Phase-Stepping" nécessite une porteuse de fréquence n fois plus élevée, n étant le nombre de marches utilisées.

Le module de traitement optique 32 comporte également un étage 42 de démultiplexage en longueur d'onde (démultiplexeur optique) qui a pour fonction de séparer les différentes longueurs d'ondes constituant l'onde lumineuse portée par une voie de détection et de transmettre séparément au module de réception 33 les M ondes lumineuses portées par la voie de détection considérée, chaque onde lumineuse correspondant au signal laser délivré par un CLFO 35.

D'un point de vue structurel, le module de réception 33 est l'étage de démodulation et comporte de manière classique un étage de conversion opto-numérique du signal 43, constitué préférentiellement de photodiodes, dont le rôle est de convertir les M ondes lumineuses transmises par le module de traitement optique, en signaux électriques, ainsi qu'un module de conversion analogique numérique (CAN) 44 chargé de numériser ces signaux.

Il comporte également un dispositif de démultiplexage temporel 45 dont la fonction est de gérer le séquencement des commutations des différentes voies de détection et ainsi de reconstituer les différents signaux temporels, les commutations étant opérées par le commutateur optique 31.

Avantageusement, le dispositif de démultiplexage temporel 45 génère la commande de commutation 47 qui pilote le commutateur optique 31.

Il comporte en outre un démodulateur de phase 46 qui exploite les signaux optiques reconstitués temporellement et délivre le signal $\Delta\phi$ après démodulation pour chacune des voies de détection multiplexées temporellement.

Avantageusement, le démodulateur de phase 46 génère les signaux de commande RF 48 et 49, de fréquences respectives $f_1$ et $f_2$ qui pilotent les modules translateurs de fréquence de l'interféromètre 41 permettant donc de jouer sur la valeur de la porteuse de fréquence $f_p$ et d'améliorer les performances de la chaîne de mesure.

Le fonctionnement des différents éléments du module 33, connu par ailleurs, n'est pas détaillée ici.

D'un point de vue fonctionnel, le commutateur optique 31 a pour fonction de sélectionner de manière séquentielle chacune des N fibres optiques, chaque fibre constituant une voie de mesure regroupant M capteurs CLFO.

Selon l'invention, la fréquence de commutation $f_{SW}$ du commutateur optique 31 est définie par le dispositif de démultiplexage temporel 45 en tenant compte de la fréquence $f_p$ de l'onde porteuse RF définie par le dispositif de démodulateur de phase 46, ainsi que de la fréquence du signal modulé en phase $f_s$ et de l'amplitude de la modulation de phase $\phi_s$ du signal optique qui porte l'information acoustique à mesurer.

En effet, comme cela a été dit précédemment, la règle de Carson permet d'estimer la bande-passante B, occupée par un signal modulé en phase, selon la relation :

$$B = 2f_s \cdot (1 + \phi_s) \qquad [12]$$

où $f_s$ est la fréquence du signal considéré et $\phi_s$ l'amplitude de la modulation de phase.

Dans la mesure où le signal considéré est porté par une onde porteuse RF, la bande-passante B du signal modulé est, par ailleurs, limitée par la fréquence $f_p$ de la porteuse, conformément à la relation :

$$B = 2 \cdot f_p \qquad [13]$$

un signal modulé par l'interféromètre à translation de fréquence 41 présentant par principe une bande passante limité à 1,5 fois la fréquence de la porteuse de la modulation.

Par suite, afin de démoduler correctement l'onde porteuse, il est nécessaire, dans la mesure où, comme cela a été dit précédemment, le signal modulé à $f_p$ occupe une bande maximale égale à $B = 2 \cdot f_p$, d'échantillonner l'onde lumineuse avec une fréquence $f_{éch}$ au moins égale, selon la règle de Shannon, à :

$$f_{éch} = 4 \cdot f_p \qquad [14]$$

D'un point de vue fonctionnel $f_p$ étant généralement compris entre quelques dizaines de kHz et quelques MHz, on choisit ici une fréquence $f_p$ préférentiellement égale à 100kHz.

Par conséquent, dans la mesure où la commutation de voie constitue un échantillonnage de l'onde portée par chacune des voies avec une fréquence $f_{SW}$, garantir la condition [14] pour chacune des N voies de détection, implique que la fréquence de commutation $f_{SW}$ du commutateur optique satisfasse, a minima, la relation suivante :

$$f_{SW} = N \cdot f_{éch} = N \cdot 4 \cdot f_p \qquad [15]$$

Il est à noter par ailleurs que le choix de la fréquence $f_p$ de l'onde porteuse RF dépend des retards liés aux composants optiques, définis en grande partie par la différence de longueur entre les deux bras de l'interféromètre à translation de fréquence, et des retards liés aux composants électroniques, fixés en grande partie par les propriétés intrinsèque des dispositifs constituant le module optoélectronique, qui conditionnent la fréquence de commutation du commutateur optique $f_{SW}$ , fréquence qui conditionne elle-même la fréquence $f_p$.

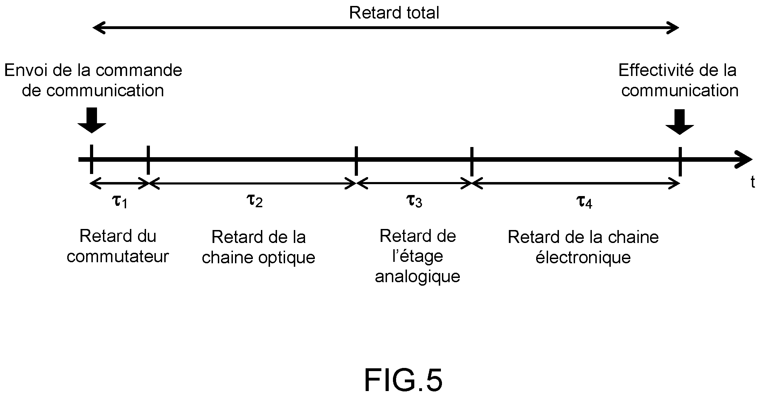

Or, comme l'illustre la figure 5, l'acquisition d'une voie de détection, après envoi de la commande de commutation, ne peut être débutée qu'après un certain délai, qui est induit par un retard dépendant du commutateur et du temps de traitement par la partie optique $t_{opt}$ et électrique $t_{elec}$. Le temps $t_{opt}$ est lié à la longueur de ligne à retard au sein de l'interféromètre, définissant la dynamique de bande passante, et le temps $t_{elec}$ est lié à bande passante et donc à la porteuse.

Comme décrit précédemment, ces temps optique $t_{opt}$ et électrique $t_{elec}$ sont donc corrélés et le fait de diminuer un de ces deux paramètres va tendre à augmenter l'autre, induisant la prise en compte d'un compromis pour optimiser la chaîne de mesure.

Plus précisément, le délai de traitement des différentes voies de détection est principalement limité par la somme du retard $\tau_1$ de commutation du commutateur 31, du retard $\tau_2$ de traversée du signal optique sur la ligne à retard de l'interféromètre 41 et du retard $\tau_3$ défini en partie par le temps de montée de l'étage analogique 43.

Le temps de montée de l'étage analogique 43 du module 33, correspond principalement au retard induit par l'étage d'amplification qui suit le détecteur.

De manière connue, ce temps dépend directement de la bande-passante $f_{BP}$ de l'étage analogique 43 et par conséquent du choix de la fréquence de la porteuse $f_p$.

Ainsi, pour un montage passe-bas à un seul étage, le retard $\tau_3$, est donné, en pratique, par la relation :

$$\tau_3 = \tau_{elec} \approx \frac{0,35}{f_{BP}} \qquad [16]$$

Le choix de la fréquence porteuse conditionne à son tour la fréquence de commutation du commutateur, qui doit atteindre une fréquence de commutation en rapport avec la fréquence de la porteuse sachant que plus la fréquence porteuse est élevée plus la commutation doit être rapide (cf. relation [15]).

De plus, la relation gain de l'interféromètre / bande passante de l'étage d'amplification analogique 43, responsable du retard $\tau_3$, étant constante, il est nécessaire de considérer le niveau d'entrée de l'étage démodulation 33.

En outre, la bande passante B de cet étage d'amplification détermine la limite de bruit de courant $i_n$ de l'étage 33 de démodulation qui est directement lié à la bande-passante selon la relation :

$$i_n \propto \sqrt{B} \qquad [17]$$

Par ailleurs, le retard $\tau_2$ introduit par la ligne à retard du module de traitement optique 32 relie le gain G de l'interféromètre à la variation de phase $\Delta\phi$, induite par la fréquence décalée $\Delta f = v_0 + f_1$ par la relation :

$$\Delta\phi = G \times \Delta f = 2\pi \times \tau_{opt} \times \Delta f \qquad [18]$$

où $\tau_{opt}$ est défini par la relation suivante :

$$\tau_2 = \tau_{opt} = 2 \times \frac{nL}{c} \qquad [19]$$

n représentant ici l'indice de réfraction de la fibre optique et c la vitesse de la lumière dans le vide; L représentant la longueur de la ligne à retard au sein de l'interféromètre (rapport de longueur entre les deux bras de l'interféromètre) et étant en pratique comprise entre 1m et 100m.

Considérant les points présentés précédemment, on doit donc choisir la grandeur L de telle sorte que le bruit des cavités laser à fibre optique (CLFO) caractérisant le signal à mesurer soit dominant devant le bruit de démodulation induit par le module optoélectronique 33 afin de pouvoir exploiter efficacement le résultat. L'ajustement de cette longueur permet de cadrer la dynamique.

Autrement dit, quand la fréquence de la porteuse augmente, la bande-passante augmente (cf. relation [13]) et donc $\tau_{elec}$ diminue (cf. relation [16]). Parallèlement, le bruit du module de démodulation 33 augmente avec l'augmentation de la bande-passant (cf. relation [17]) et par conséquent L doit être choisi plus grand et donc le retard $\tau_{opt}$ augmente (cf. relation [18]). On choisit alors les meilleurs compromis en fonction du besoin système avec pour objectif de minimiser $\tau_{elec}$ + $\tau_{opt}$.

Comme on peut le constater en considérant le texte qui précède, l'association, selon l'invention, d'un commutateur optique avec un interféromètre à translation de fréquence permet ainsi, avantageusement de former une chaîne de mesure unique qui, associé à une chaîne de détection comprenant un réseau de capteurs optiques constitué d'une pluralité de voies de détection constituées chacune d'une fibre optique sur laquelle est agencé une pluralité de cavités laser à fibre optique (CLFO), permet de réaliser un dispositif de réception et de mesure des différents signaux optique incidents provenant de la chaîne de détection présentant des niveaux de performance supérieurs, à la fois en termes de bande passante et de dynamique, pour une compacité matérielle forte et une consommation électrique faible, par rapport aux autres chaînes de mesure connues, tels que les dispositifs mettant en œuvre des interféromètres de type PGC ou "Phase-Stepping".

Il est ainsi possible, par exemple, de mettre en œuvre la voie de mesure unique selon l'invention pour réaliser une antenne sonar linéaire présentant une faible section comparée aux antennes linéaires classiques et comportant un grand nombre de capteurs à cavité laser à fibre optique (CLFO) répartis en groupes de M CLFO placés en série sur des fibres optiques pour former des voies de détection reliées à une voie de mesure commune selon l'invention, assurant la démodulation de phase des M signaux portés par chacune des voies de détection.

Une telle structure permet avantageusement de mutualiser les moyens de mesure pour former une chaîne unique, alors que, dans un dispositif standard, ces moyens sont dupliqués, une chaine de mesure indépendante étant relié à chacune des voies de détection et assurant, de manière indépendante, la démodulation de phase des M signaux portés par la voie de détection considérée. Cette rationalisation des moyens de mesure permet avantageusement de disposer d'un système de réception et de mesure des signaux d'antenne présentant un encombrement limité, ainsi que qu'un coût de fabrication et une consommation avantageusement réduits, tout en garantissant des performances en termes de dynamique de signal et de bande passante compatibles des performances attendues pour une telle antenne.

Du point de vue de la réalisation, les différents modules constituant la chaîne de mesure selon l'invention peuvent être constitués de différents éléments.

Ainsi, selon un mode de réalisation préféré du dispositif selon l'invention, le ou les translateurs de fréquence compris au sein de l'interféromètre à translation de fréquence 41 du module de traitement optique 32 peuvent être constitués de modulateurs acousto-optiques.

Alternativement, la translation de fréquence peut être réalisée à travers de l'optique intégrée, c'est-à-dire via des éléments ou composants optiques de très petite dimension inclus dans des portions de fibre optique et réalisés par modifications partielle de la fibre optique (par exemple à travers les interactions laser-matière entre un laser de fabrication et la portions de fibre optique), par exemple par technique de translation de fréquence serrodyne.

Par ailleurs, l'interféromètre à translation de fréquence 41 du module de traitement optique 32 peut être fabriqué selon le modèle d'interférométrie de Michelson.

En outre, dans un mode de réalisation particulier, l'interféromètre de Michelson utilisé peut être un interféromètre à miroirs utilisant des miroirs de Faraday. Un tel dispositif permet avantageusement de rendre le fonctionnement de l'interféromètre insensible aux variations de polarisation des signaux optique provenant des capteurs CLFO transmis aux deux bras de l'interféromètre.

Alternativement encore, le module d'interféromètre à translation de fréquence peut être fabriqué selon le modèle d'interférométrie de Mach-Zehnder à maintien de polarisation.

Avantageusement, le bras le plus long de l'interféromètre est constitué d'une fibre ayant une faible sensibilité à la température devant celle de la fibre du bras court, permettant au dispositif, comprenant la chaîne de mesure et soumis dans son environnement, de compenser de manière passive des variations de température induisant normalement des variations de différence de marche (ou retard $\tau$), et en conséquence une dérive à moyenne non nulle d'amplitude très grande devant celle du signal utile pour une difficile d'exploitation de la mesure.

Ainsi, également, le commutateur optique 31 peut consister en un commutateur électro-optique.

Alternativement le commutateur optique 31 peut être réalisé au moyen d'amplificateurs optiques à semi-conducteurs.

**Revendications**

1. Dispositif de détection de signaux sonar comportant N voies de détection possédant chacune M cavités laser à fibre optique (35), lesdites voies de détection étant configurées pour détecter et convertir les signaux acoustiques en signaux optiques, ainsi qu'une chaîne de mesure unique, combinant les N voies de détection par multiplexage temporel; **caractérisé en ce que** ladite chaine de mesure combine un commutateur optique et des moyens de mesure interférométrique configurés pour mesurer, pour chacune des N voies de détection, la fréquence optique du signal délivré par chacune des M cavités laser à fibre optique, ladite chaine de mesure comprenant :

   - un commutateur optique Nx1 (31) permettant de sélectionner, à chaque mesure interférométrique, la fibre optique comportant les M cavités laser à fibre optique multiplexées en longueur d'onde formant une même voie de détection;
   - un interféromètre à translation de fréquence (41) configuré pour transformer le signal optique modulé en fréquence délivré par les M cavités laser à fibre optique formant une même voie de détection en un signal optique modulé en intensité;

- un démultiplexeur optique (42) permettant de séparer les M signaux optiques formant ledit signal optique modulé en intensité et délivrant chacun des M signaux optiques sur une sortie propre permettant des conversions photoélectriques indépendantes;

- un étage de conversion optoélectronique (43-44) configuré pour générer, à partir du signal résultant du battement des deux ondes de fréquences différentes généré dans l'interféromètre (41), un signal électrique, analogique puis numérique;

- un démultiplexeur temporel (45) permettant de reconstituer les différents signaux temporels issus des différentes voies de détection,

- un démodulateur de phase (46) permettant de traiter les signaux reconstitués par le démultiplexeur temporel (45) à partir des signaux optiques délivrés par chacune des cavités laser à fibre optique (35).

2. Dispositif selon la revendication 1, dans lequel ledit interféromètre (41) comprend des moyens pour translater en fréquence, l'un par rapport à l'autre, les signaux optiques transitant par chacun des bras de l'interféromètre (41).

3. Dispositif selon la revendication 2, dans lequel lesdits moyens de translation en fréquence sont placés dans le bras le plus long de l'interféromètre (41).

4. Dispositif selon la revendication 2, dans lequel lesdits moyens de translation en fréquence sont placés dans le bras le plus court de l'interféromètre (41).

5. Dispositif selon la revendication 2, dans lequel lesdits moyens de translation en fréquence sont composés de deux translateurs de fréquence réalisant des translations de fréquences distinctes, placés chacun dans un des bras de l'interféromètre (41).

6. Dispositif selon l'une quelconque des revendications 2 à 5, dans lequel lesdits moyens de translation en fréquence sont des modulateurs acousto-optiques.

7. Dispositif selon l'une quelconque des revendications 2 à 5, dans lequel lesdits moyens de translation en fréquence sont des éléments optiques intégrés dans une fibre optique.

8. Dispositif selon l'une quelconque des revendications 1 à 7, dans lequel ledit interféromètre (41) est un interféromètre de Michelson.

9. Dispositif selon l'une quelconque des revendications 1 à 8, dans lequel ledit interféromètre (41) comporte des miroirs de Faraday configurés et agencés pour rendre le système indépendant des variations en polarisation des différents signaux par les cavités laser à fibre optique.

10. Dispositif selon l'une quelconque des revendications 1 à 9, dans lequel chacun des bras dudit interféromètre (41) est formé par une fibre optique de taille différente, la fibre optique formant le bras le plus long présentant une sensibilité à la température plus faible que la fibre du bras le plus court.

11. Dispositif selon l'une quelconque des revendications précédentes, dans lequel le démultiplexeur temporel (45) permet de générer un signal de commande du commutateur optique Nx1 (31).

12. Dispositif selon l'une quelconque des revendications précédentes, dans lequel le démodulateur de phase (46) permet de générer un signal de commande de l'interféromètre.

**Patentansprüche**

1. Vorrichtung zur Erfassung von Sonarsignalen, umfassend N Erfassungskanäle, die jeweils M faseroptische Laserresonatoren (35) besitzen, wobei die Erfassungskanäle konfiguriert sind, um die akustischen Signale zu erfassen und in optische Signale umzuwandeln, sowie eine einzige Messkette, die die N Erfassungskanäle durch zeitliches Multiplexen kombiniert; **dadurch gekennzeichnet, dass** die Messkette einen optische Kommutator und Interferometriemessmittel kombiniert, um für jeden der N Erfassungskanäle die optische Frequenz des von jedem der M faseroptischen Laserresonatoren abgegebenen Signals zu messen, wobei die Messkette Folgendes umfasst:

- einen optischen Kommutator N×1 (31), der ermöglicht, bei jeder Interferometriemessung die optische Faser auszuwählen, die die M faseroptischen Laserresonatoren umfasst, die gemäß Wellenlängen gemultiplext sind, die einen gleichen Erfassungskanal bilden;

- ein Frequenzverschiebungsinterferometer (41), das konfiguriert ist, um das frequenzmodulierte, von den M faseroptischen Laserresonatoren, die einen gleichen Erfassungskanal bilden, abgegebene optische Signal in ein intensitätsmoduliertes optisches Signal umzuwandeln;

- einen optischen Demultiplexer (42), der ermöglicht, die M optischen Signale, die das intensitätsmodulierte optische Signal bilden und die jeweils M optische Signale abgeben, an einem eigenen Ausgang zu trennen, wodurch unabhängige photoelektrische Umwandlungen ermöglicht werden;

- eine Stufe optoelektronischer Umwandlung (43-44), die konfiguriert ist, um ausgehend von dem Signal, das sich aus dem Pulsschlag der zwei Wellen mit unterschiedlichen Frequenzen ergibt und im Interferometer (41) erzeugt wird, ein elektrisches, analoges, dann numerisches Signal zu erzeugen;

- einen zeitlichen Demultiplexer (45), der ermöglicht, die unterschiedlichen zeitlichen Signale, die aus den unterschiedlichen Erfassungskanälen stammen, wiederherzustellen,

- einen Phasendemodulator (46), der ermöglicht, die von dem zeitlichen Demultiplexer (45) ausgehend von den optischen Signalen, die von jedem der faseroptischen Laserresonatoren (35) abgegeben werden, wiederhergestellte Signale zu verarbeiten.

2. Vorrichtung nach Anspruch 1, wobei der Interferometer (41) Mittel zur Frequenzverschiebung der optischen Signale, die jeden der Arme des Interferometers (41) durchlaufen, in Bezug zueinander umfasst.

3. Vorrichtung nach Anspruch 2, wobei die Mittel zur Frequenzverschiebung im längsten Arm des Interferometers (41) angeordnet sind.

4. Vorrichtung nach Anspruch 2, wobei die Mittel zur Frequenzverschiebung im kürzesten Arm des Interferometers (41) angeordnet sind.

5. Vorrichtung nach Anspruch 2, wobei die Mittel zur Frequenzverschiebung aus zwei Frequenzverschiebern zusammengesetzt sind, die verschiedene Frequenzverschiebungen durchführen und jeweils in einem der Arme des Interferometers (41) angeordnet sind.

6. Vorrichtung nach einem der Ansprüche 2 bis 5, wobei die Mittel zur Frequenzverschiebung akustisch-optische Modulatoren sind.

7. Vorrichtung nach einem der Ansprüche 2 bis 5, wobei die Mittel zur Frequenzverschiebung optische Elemente sind, die in einer optischen Faser eingebaut sind.

8. Vorrichtung nach einem der Ansprüche 1 bis 7, wobei das Interferometer (41) ein Michelson-Interferometer ist.

9. Vorrichtung nach einem der Ansprüche 1 bis 8, wobei das Interferometer (41) faradaysche Spiegel umfasst, die konfiguriert und eingerichtet sind, um das System unabhängig von den Polarisationsschwankungen der unterschiedlichen Signale durch die faseroptischen Laserresonatoren zu machen.

10. Vorrichtung nach einem der Ansprüche 1 bis 9, wobei jeder der Arme des Interferometers (41) durch eine optische Faser unterschiedlicher Länge gebildet ist, wobei die optische Faser, die den längsten Arm gebildet, eine schwächere Temperaturempfindlichkeit aufweist als die Faser des kürzesten Arms.

11. Vorrichtung nach einem der vorstehenden Ansprüche, wobei der zeitliche Demultiplexer (45) ermöglicht, ein Steuersignal des optischen Kommutators N×1 (31) zu erzeugen.

12. Vorrichtung nach einem der vorstehenden Ansprüche, wobei der Phasendemodulator (46) ermöglicht, ein Steuersignal des Interferometers zu erzeugen.

**Claims**

1. Device for detecting sonor signals, comprising N detection pathways, each having M fibre optic laser cavities (35), said detection pathways being configured to detect and convert the acoustic signals into optical signals, as well as a single measurement chain, combining the N detection pathways by time-division multiplexing; **characterised in that** said measurement chain combines an optical switch and interferometric measurement means, configured to measure, for each of the N detection pathways, the optical frequency of the signal delivered by each of the M fibre optic laser cavities, said measurement chain comprising:

- an optical switch N×1 (31) making it possible to select, at each interferometric measurement, the optical fibre comprising the M fibre optic laser cavities multiplexed in a wavelength forming one same detection pathway;
- a frequency translation interferometer (41), configured to transform the frequency modulated optical signal delivered by the M fibre optic laser cavities forming one same detection pathway in an intensity modulated optical signal;
- an optical demultiplexer (42) making it possible to separate the M optical signals forming said intensity modulated optical signal and each delivering M optical signals over a specific outlet enabling independent photoelectric conversions;
- an optoelectronic conversion stage (43-44), configured to generate, from the signal resulting from the beat of the two different frequency waves generated in the interferometer (41), an electric signal, analogue then digital;
- a time-division demultiplexer (45) making it possible to reconstitute the different time signals coming from the different detection pathways;
- a phase demodulator (46) making it possible to process the signals reconstituted by the time-division demultiplexer (45) from the optical signals delivered by each of the fibre optic laser cavities (35).

2. Device according to claim 1, wherein said interferometer (41) comprises means to translate into frequency, against one another, the optical signals crossing through each of the arms of the interferometer (41).

3. Device according to claim 2, wherein said frequency translation means are placed in the longest arm of the interferometer (41).

4. Device according to claim 2, wherein said frequency translation means are placed in the shortest arm of the interferometer (41).

5. Device according to claim 2, wherein said frequency transition means are composed of two frequency translators performing distinct frequency translations, each placed in one of the arms of the interferometer (41).

6. Device according to any one of claims 2 to 5, wherein said frequency translation means are acousto-optical modulators.

7. Device according to any one of claims 2 to 5, wherein said frequency translation means are optical elements integrated in an optical fibre.

8. Device according to any one of claims 1 to 7, wherein said interferometer (41) is a Michelson interferometer.

9. Device according to any one of claims 1 to 8, wherein said interferometer (41) comprises Faraday mirrors, configured and arranged to make the system independent from the polarised variations of the different signals by the fibre optic laser cavities.

10. Device according to any one of claims 1 to 9, wherein each of the arms of said interferometer (41) is formed by an optical fibre of a different size, the optical fibre forming the longest arm having a sensitivity to the temperature lower than the fibre of the shortest arm.

11. Device according to any one of the preceding claims, wherein the time-division demultiplexer (45) makes it possible to generate a control signal of the optical switch N×1 (31).

12. Device according to any one of the preceding claims, wherein the phase demodulator (46) makes it possible to generate a control signal of the interferometer.

12

Commutateur
optique N vers 1

Δt

PZT

Démodulation
PGC

14

13      11

ΔΦ

## FIG.1

22

Commutateur
optique N vers 1

Δt

EOM

Démodulation
phase-stepping

24

23      21

ΔΦ

## FIG.2

CFLO 1    CFLO 2    ..........    CFLO M

Voie 1    Pompe    WDM    34

Voie 2    Pompe    WDM    35

Voie N    Pompe    WDM    35    36

37

Commande
Commutation

31    Commutateur
optique Nx1    Module de
traitement optique    32

Module optoélectronique M    33

30

FIG.3

FIG.4

EP 4 073 472 B1

Retard total

Envoi de la commande
de communication

Effectivité de la
communication

$\tau_1$

$\tau_2$

$\tau_3$

$\tau_4$

t

Retard du
commutateur

Retard de la
chaine optique

Retard de
l'étage
analogique

Retard de la chaine
électronique

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2833102 A
- WO 2019046881 A1
- EP 0895072 A2
- WO 2011039501 A2

**Littérature non-brevet citée dans la description**

- **A.D KERSEY et al.** Fiber grating sensors. *Journal of Lightwave Technology*, 01 August 1997, vol. 15 (8), 1442-1463